# EUROPÄISCHE PATENTSCHRIFT

(11) **EP 0 329 028 B1**
(45) Veröffentlichungstag und Bekanntmachung des Hinweises auf die Patenterteilung: **14.07.1993**
(21) Anmeldenummer: 89102295.6
(22) Anmeldetag: 10.02.1989
(51) Int. Cl.: C08L 59/02, C08L 33/08

(54) **Verträgliche Polymermischungen**
Compatible polymer mixture
Mélange des polymères compatible

(30) Priorität: 18.02.1988 DE 3805052
(43) Veröffentlichungstag der Anmeldung: 23.08.1989
(73) Patentinhaber: Röhm GmbH, 64293 Darmstadt (DE)
(72) Erfinder: Siol, Werner, Dr., D-6100 Darmstadt-Eberstadt (DE); Frank, Klaus, D-6109 Mühltal (DE); Terbrack, Ulrich, D-6107 Reinheim 2 (DE)

(56) Entgegenhaltungen:
- EP-A- 0 115 373
- EP-A- 0 124 879
- EP-A- 0 164 667
- EP-A- 0 181 541
- DE-A- 1 931 392
- PATENT ABSTRACTS OF JAPAN Band 5, Nr.79(C-56)(751), 23.05.1981; & JP-A-5628236

## Beschreibung

### Gebiet der Erfindung

Die Erfindung betrifft verträgliche Mischungen (Polyblends) bestehend aus Polyoxymethylen und Polyalkylacrylaten.

### Stand der Technik

In der Regel gelten unterschiedliche Polymerspecies als nicht miteinander verträglich, d.h. unterschiedliche Polymerspecies bilden bis hinab zu geringen Anteilen einer Komponente im allgemeinen keine homogene Phase aus, die durch völlige Mischbarkeit der Komponenten charakterisiert wäre.
Gewisse Ausnahmen von dieser Regel haben zunehmendes Interesse speziell bei den mit der theoretischen Deutung der Phänomene befaßten Fachleuten hervorgerufen.

Völlig kompatible Mischungen von Polymeren zeigen völlige Löslichkeit (Mischbarkeit) in allen Mischungsverhältnissen. Zum Nachweis der Mischbarkeit wurde häufig die Glastemperatur Tg oder die sogenannte "Optische Methode" (Klarheit eines aus homogener Lösung des Polymergemischs gegossenen Films) herangezogen. (Vgl. Brandrup-Immergut, Polymer Handbook, 2. Ed., III-211-213; Kirk-Othmer, Encyclopedia of Chemical Technology, 3rd Ed. Vol. 18, 443 - 478, J. Wiley & Sons 1982).

So zeigt z.B. eine Mischung aus Polyethylenoxid mit Polyacrylsäure bei niederem Polyethylenoxidgehalt eine höhere Tg als jede der beiden Komponenten selbst. (Vgl. K.L. Smith, A.E. Winslow & D.E. Petersen Ind. Eng. Chem. 51, 1361 (1959)).
Polyoxymethylen (POM) hat aufgrund seiner günstigen mechanischen Eigenschaften (hohe Härte, Steifheit, Zähigkeit bis hinab zu tiefen Temperaturen) sowie seiner Beständigkeit gegen Lösemitteln einen festen Platz unter den Konstruktionswerkstoffen gefunden. So wurden 1983 weltweit bereits ca. 190 000 t POM verbraucht. (Vgl. R. Vieweg, M. Reiher, H. Scheurlen Ed. Kunststoff-Handbuch Bd. 11, Carl Hanser Verlag München 1971; G.E. Haddeland in Process Economics Programm Report No. 69 Acetal Resins, Stanford Research Institute, Menlo Park, USA (1971); Kirk-Othmer, Encyclopedia of Chemical Technology 3rd Ed. Vol.1, pp 112 - 123, J. Wiley 1978; Winnacker-Küchler Chemische Technologie Bd. 6., Org. Technologie II, 4. Auflage, Carl Hanser, München 1982).

Die Literatur bietet eine Reihe von Beispielen für Abmischungen von Polyoxymethylen mit anderen Kunststoffen, wobei offensichtlich verschiedenartige technologische Ziele verfolgt wurden, ohne daß indessen echte Verträglichkeit der Komponenten anvisiert oder gar erreicht wird. So beschreibt die DE-A 27 09 037 eine Beschichtungspaste für Geschoßtreibladungen, die aus einer Lösung von POM, Polymethylmethacrylat (PMMA) und Paraformaldehyd in Toluol gewonnen wurde. (Vgl. Chem. Abstr. 90, 206 733 h). Die Eigenschaft des POM Kristallfasern zu bilden, wurde verschiedentlich zur Herstellung faserverstärkter Kunststoffe ausgenutzt, u.a. auf Basis von PMMA (Vgl. Chem. Abstr. 83, 148376 m; Chem. Abstr. 87, 85985 u).
Relativ viele Bemühungen drehen sich um die Verbesserung der Schlagzähigkeit des POM durch Abmischen mit Elastomeren, beispielsweise Acrylnitril-gepfropften Ethylen-Propylen-Rubber (Chem. Abstr. 99, 176894c) oder MMA-gepfropftem Polybutadien (Vgl. DE-A 3 441 547), bzw. Butadien-MMA-Blockcopolymeren (DE-A 24 20 300) oder Butadien-Styrol- bzw. Acrylnitril-Butadien-Styrol-Pfropf-Copolymeren (DE-A 19 31 392). Andere Schlagzähmodifikationen sind Acrylnitril/Styrol- oder Styrol-gepfropftes Polyoxymethylen (DE-A 26 59 357). In der JP-A 60,108 413 (Chem. Abstr. 104, 6621r) wird die Herstellung schlagzähen POM durch Polymerisation von Trioxan in Gegenwart eines Elastomeren z. B. eines Ethylen-Propylen-2-Hydroxyethylmethacrylat-Copolymeren empfohlen (Vgl. auch Chem. Abstr. 103, 19692v). Die EP-A 115 373 empfiehlt den Zusatz eines multiphasischen vernetzten elastomeren Copolymerisats zu POM-Mischungen mit einem Alkyl-C₁₀₋₃₀-Fettsäure-C₂₋₇-Ester und Polymeren wie Caprolactam-Caprolacton-Copolymeren oder Polybutylmethacrylat, die mit dem Fettsäureester verträglich und gegenüber POM inert sind.

### Aufgabe und Lösung

Die besondere Neigung des POM zur Kristallisation, die letztendlich auch die hohe mechanische Festigkeit und die gute Beständigkeit gegenüber Lösungsmitteln ausmacht, sowie der Umstand, daß das Material bereits ca. 50 Grad C oberhalb des Kristallitschmeltpunktes (Fp: 175 - 184 Grad C) zur Zersetzung unter Formaldehydabspaltung neigt (Ceiling-Temperatur: 127 Grad C), gestatten allerdings nur einen sehr engen Verarbeitungsspielraum, so daß bis heute etwa 90 % des Gesamtverbrauches an POM auf das Spritzgießen entfallen, da eine nachträgliche Verformung von beispielsweise Platten durch Tiefziehen o.ä. wegen des sehr geringen Verarbeitungsspielraumes dieses Materials nur schwer möglich ist. Insgesamt gelten die Homo- und Copolymeren vom POM-typ als instabil gegenüber Hitze und Sauerstoff, so daß sie nur nach Zusatz von geeigneten Stabilisatoren verarbeitet werden können. (Vgl. H. Batzer Ed. Polymere Werkstoffe, Band III, Technologie 2, pg 144 - 148 f; Band II, pg. 375 - 376 Georg Thieme Verlag, Stuttgart, New York 1984; US-A 3 081 280). Da der Zerfall des Polyoxymethylens von den hydroxygruppenhaltigen Kettenenden ausgeht, sind praktisch alle handelsüblichen POM-Qualitäten durch endständige Veresterung oder Veretherung stabilisiert. Bei den in der Praxis vorgegebenen Einsatzbedingungen reicht allerdings diese Stabilisierung nicht aus, da z.B. unter dem Einfluß der (aus abgespaltenem Formaldehyd gebildeten) Ameisensäure erneut polymere Bruchstücke mit thermolabilisierenden Hydroxy-Endgruppen gebildet werden. Man setzt daher als Stabilisatoren Aldehyd- und säurebindende Additive wie z.B. Harnstoff-Melamin-, Hydrazin-Derivate sowie polymerverträgliche Mischpolyamide (wie eines PA-6/PA-66-Mischpolyamids) meist zusammen mit Antioxidantien zu (vgl. H. Batzer loc.cit Bd. II, pg 375 - 376). Die Problematik der Verarbeitung von POM wird daher noch 1980 zutreffend durch die Feststellung charakterisiert: "daß der POM-Verbrauch eines Landes von dessen Industriealisierungsgrad abhängig ist" [Vgl. H-D-Sabel, Kunststoffe 70, 641 (1980)]. Das Interesse der Technik mußte daher darauf gerichtet sein, durch Modifikation die Verarbeitbarkeit und Handhabbarkeit von POM in Form seiner Homo- und Copolymerisate zu verbessern, möglichst ohne deren vorteilhafte Eigenschaften negativ zu beeinflussen.

Es wurde nun gefunden, daß derartige Modifikationen erzielt werden können, da Vertreter der Polyacrylatklasse existieren, die mit POM in Form seiner Homo- und Copolymerisate verträglich sind. Diese Vertreter können z.B. mit POM in der Schmelze zu glasklaren Blends gemischt werden.

Die Erfindung betrifft somit verträgliche Polymermischungen VPM ausgehend von Polyoxymethylen in Form seiner Homo- und Copolymerisate, wobei diese Mischungen bestehen aus:
a) 0,5 - 99,5, insbesondere 60 - 99,5, speziell 80 - 99 Gew.-% Polyoxymethylen und
b) 99,5 - 0,5, insbesondere 40 - 0,5, speziell 20 - 1 Gew.-% eines Polymeren P1, das zu 40 - 100 Gew.-% aus mindestens einem Monomeren der Formel I 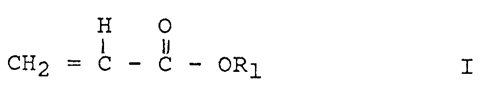 worin R₁ für Methyl oder Ethyl steht, und zu 0 bis 60 Gew.-% aus Monomeren der Formel II 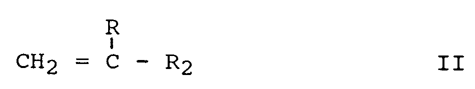 worin R für Wasserstoff oder Methyl und
   R₂ für Phenyl, oder für einen 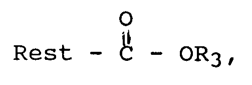 worin R₃ einen Alkylrest mit 1 - 14 Kohlenstoffatomen bedeutet,
   steht, mit der Maßgabe, daß nicht gleichzeitig R gleich Wasserstoff und R₁ gleich R₃ gleich Methyl sein sollen,
   aufgebaut ist.

Im allgemeinen ergänzt sich die Summe aus I) und II) zu 100 Gew.-%.

Die vorliegenden Erfahrungen deuten darauf hin, daß besonders gute Verträglichkeit des POM mit den Polymeren P1 herrscht, wenn das Polymer P1 zu mindestens 60 Gew.-% und bevorzugt zu mindestens 80 Gew.-% aus den Monomeren der Formel I aufgebaut ist. Beispielsweise erweisen sich POM und Polymethylacrylat (R₁ = CH₃) im gesamten untersuchten Mischungsverhältnis von 0,5 bis 99,5 Gew.-% POM und entsprechend 99,5 - 0,5 Gew.-% Polymethylacrylat als miteinander verträglich.

Soweit es sich bei dem Polymeren P1 nicht um ausschließlich aus Monomeren der Formel I gebildete Polymere handelt, können - in Anteilen von 0 - 60 Gew.-%, vorzugsweise > 1 Gew.-% - noch weitere mit den Monomeren der Formel I copolymerisierbare Monomere der Formel II am Aufbau der Polymeren P1 beteiligt sein. Im allgemeinen wird der Anteil der zusätzlichen Monomeren eher im Bereich 1 - 20 Gew.-% bezogen auf P1 liegen.

Erwähnt seien z.B. Mischungen aus POM und einem Polymeren P1 gebildet aus 93 Gew.-Teilen Methylacrylat und 7 Gew.-Teilen Styrol oder einem Polymeren P1 gebildet aus 90 Gew.-Teilen Ethylacrylat und 10 Gew.-Teilen 2-Ethylhexylmethacrylat.

Bei den erfindungsgemäßen Polymermischungen VPM handelt es sich definitionsgemäß um **verträgliche** Polymermischungen (Polyblends).
Als Kriterien für die Verträglichkeit (Kompatibilität) seien - im Einklang mit den Standardtexten - betrachtet:
I) Die Beobachtung der Glastemperatur Tg.
   Sofern die Polymerkomponenten Glastemperaturen besitzen, die weit genug auseinanderliegen um durch "Differential Scanning Calorimetry" (DSC), dilatometrisch, dielektrisch oder radioluminiszenzspektroskopisch unterschieden zu werden, zeigt sich vorhandene Verträglichkeit durch eine Verschiebung oder durch das Verschwinden der Tg der Polymer-Einzel-Komponenten an. (Vgl. Olabisi et al. in Polymer-Polymer-Miscibility, loc.cit. pp. 21, 123).
II) Die "optische Methode".
   Dabei wird aus einer homogenen Lösung der Polymerkomponenten ein Film ausgegossen, der nach dem Trocknen auch bei Vergrößerung keine optisch wahrnehmbare Inhomogenität aufweisen darf.

Im vorliegenden Falle bereitet der Nachweis der Verträglichkeit nach I und insbesondere nach II Schwierigkeiten, da Polyoxymethylen sehr gut kristallisiert und somit im allgemeinen ohnehin nicht transparent ist. Am besten läßt sich die Verträglichkeit von POM mit den Polymeren P1 in der Schmelze nachweisen. So ergeben die Polymeren P1 in der Regel mit POM eine glasklare (=verträgliche) Schmelze.

### Die Polyoxymethylenkomponente a)

Unter Polyoxymethylen (POM) werden im Rahmen der vorliegenden Erfindung die im "Stand der Technik" s. oben diskutierten Polymeren verstanden, die ganz oder überwiegend aus -(CH₂-O)-Einheiten aufgebaut sind, d.h. die üblicherweise ebenfalls unter dem Begriff POM zusammengefaßten Homo- oder Copolymerisate, insbesondere in den stabilisierten, speziell den handelsüblichen Formen. Bekanntlich kann die Herstellung von POM-Homopolymeren beispielsweise durch anionische Polymerisation von Formaldehyd z.B. in Suspension und anschließende Endgruppenstabilisation, erfolgen, wobei Trialkylamine oder Alkalialkoxide als Initiatoren dienen. Die Stabilisierung kann z.B. durch Acylierung oder Veretherung der endständigen Halbacetal-OH-Gruppen beispielsweise mit Säureanhydriden wie Acetanhydrid oder mit Epoxiden wie Ethylenoxid erfolgen.
Copolymerisate vom POM-Typ können beispielsweise durch kationische Suspensionspolymerisation, ausgehend z.B. von Formaldehyd oder Trioxan mit Lewissäuren wie BF₃, HClO₄ gewonnen werden. Als Copolymerisationskomponente für POM kann z.B. Ethylen-oxid, Dioxolan oder Butandiolformal (Massengehalt ca. 2 - 4 %) dienen. Als Suspensionsmedium dient meist ein aliphatischer oder cycloaliphatischer Kohlenwasserstoff.

Die mittlere Molekülmasse (Zahlenmittel) liegt im allgemeinen im Bereich zwischen Mn = 20 000 und Mn = 100 000, die Uneinheitlichkeit M̅w/M̅n bei ca. 2. Die Homopolymeren weisen einen höheren Kristallisationsgrad (bis 90 %) und somit etwas höhere Härte, Steifigkeit und Festigkeit als die Copolymeren auf. Der E-Modul des Homopolymerisats liegt bei ca. 2 800 MPa, der des Copolymerisats bei ca. 3 200 MPa.
Polyoxymethylen löst sich z.B. im Hexafluroacetonsesquihydrat und bei höheren Temperaturen in m-Kresol. Vorteilhafterweise werden - wie allgemein üblich - in der oben angegebenen Weise stabilisierte Polyoxymethylene eingesetzt. Ferner können die Polymermischungen VPM bei der praktischen Anwendung an sich bekannte Zusatzstoffe wie Weichmacher, Gleitmittel, Farbstoffe und Pigmente, Filler sowie weitere Stabilisatoren in den üblichen Mengen, d.h. im allgemeinen < 20 Gew.-% bezogen auf die Polymermischungen VPM enthalten. (Vgl. R. Gächter und H. Müller Taschenbuch der Kunststoff-Additive, Carl Hanser Verlag).
Als POM Handelsprodukt kommt z.B. die Type DELRIN 500 F ® bzw. 900 F ® der Fa. DuPont infrage.

### Die Acrylatpolymerkomponente b)

Das aus den Monomeren der Formel I und gegebenenfalls weiteren Monomeren der Formel II aufgebaute Polymere P1 kann nach den bekannten Polymerisationsverfahren vorzugsweise radikalisch, beispielsweise durch Emulsions- bzw. Perl-, Lösungs- oder Substanzpolymerisation hergestellt werden. (Vgl. Kirk-Othmer, Encyclopedia of Chemical Technology 3rd Ed. Vol. 1 pp. 330 - 342, Vol. 18, pp 720 - 755, J. Wiley; H. Rauch-Puntigam, Th. Völker, Acryl- und Methacrylverbindungen). Als Initiator kommen gewöhnlich die an sich bekannten Radikal-Initiatoren wie Peroxyverbindungen und Azoverbindungen infrage, in Abhängigkeit von den Monomeren und dem Polymerisationstyp, wobei die Starter-Mengen im allgemeinen im Bereich 0,001 bis 0,5 Gew.-% bezogen auf die Monomeren liegen.
Für die Emulsionspolymerisation kommen z.B. Peroxydisulfate oder gegebenenfalls Redoxsysteme, für die Substanzpolymerisation sowohl Peroxide wie Dibenzoylperoxid oder Dilauroylperoxid, als Azoverbindungen z.B. Azoisobutyrodinitril in Betracht, ebenso bei Lösungspolymerisation oder Perlpolymerisation. Zur Regelung des Molekulargewichts können die üblichen Regler, insbesondere die bekannten Schwefelregler, etwa aus der Gruppe der Mercaptane wie z.B. Dodecylmercaptan angewendet werden.
Überwiegend erfolgt die Polymerisation bei erhöhter Temperatur z.B. oberhalb 50 Grad C. Apparativ bedient man sich der üblichen Gerätschaften, z.B. Reaktoren.
Das Molgewicht der Polymerisate P1 scheint nicht eigentlich limitierend zu sein, jedoch wird man im allgemeinen als Acrylatpolymerkomponente b) Polymere im Molgewichtsbereich M 2 000 bis 5 000 000 vorzugsweise 20 000 bis 3 000 000 verwenden. (Bestimmung durch Lichtstreuung: Zur Bestimmung der Molgewichte vgl. Houben-Weyl, Methoden der Org. Chemie, 4. Auflage Bd. 14/1 Georg Thieme-Verlag Stuttgart 1961). Die Einstellung des Molekulargewichts der Polymeren P1 richtet sich nach dem Anwendungsgebiet (siehe unten).

### Herstellung der Mischungen VPM

Die verträglichen Mischungen VPM können durch die unterschiedlichen Verfahren hergestellt werden, sie werden z.B. durch intensives mechanisches Vermischen der Komponenten a) und b) in der Schmelze, im Extruder usw. erzeugt. Ebenso kann die Polymermischung VPM aus gemeinsamen Fällungsmitteln erzeugt werden. Der Mischungsart sind im Prinzip keine Grenzen gesetzt.
Man erzeugt in der Regel zunächst Mischungen der Komponenten a) und b) wobei vorteilhaft von Feststoffen in Form beispielsweise eines Perlpolymerisats oder eines Granulats ausgegangen wird unter Verwendung langsam laufender Mischaggregate wie z.B. Trommel, Rhönrad-, Doppelkammer-Pflugscharmischern. Die langsam laufenden Mischaggregate verursachen ein mechanisches Mischen, ohne daß die Phasengrenzen aufgehoben werden. (Vgl. Ullmanns Encyklopädie der Technischen Chemie, 4. Auflage, Bd. 2, pg. 282 - 311, Verlag Chemie). Anschließend erfolgt die thermoplastische Aufbereitung durch homogenes Mischen in der Schmelze unter Verwendung von heizbaren Mischaggregaten bei den dafür geeigneten Temperaturen z.B. 150 bis ca. 200 Grad C in Knetern oder vorzugsweise Extrudern, z.B. Ein- oder Mehrschneckenextrudern oder gegebenenfalls in Extrudern mit oszillierender Schnecke und Scherstiften (z.B. im BUSSCO-Kneter).
Man kann nach diesen Verfahren Gleichkorngranulate (z.B. Heißabschlag, Würfelform, Rundkorn) herstellen. Die Korngröße der Granulate liegt dabei im Bereich 2 bis 5 mm. Eine weitere, einfache Methode zur Erzeugung der Polymerverbindungen VPM ist das Abmischen von POM mit sprühgetrockneten Polymerdispersionen enthaltend Polymerkomponente P1.

### Vorteilhafte Wirkungen der Mischungen VPM

Die erfindungsgemäßen verträglichen Polymermischungen VPM aus POM und den Polymeren P1 bieten sich, zweckmäßig für die Verwendungsbereiche an, in denen POM bereits nach dem Stand der Technik angewendet wurde, beispielsweise als Konstruktionswerkstoff im Apparatebau, als Präzisionsteil in der Feinmechanik, als Installationswerkstoff usw. Von besonderem Interesse sind, wie bereits erwähnt, Polymermischungen, die 80 - 99,5 Gew.-% POM und 20 - 0,5 Gew.-% Polymer P1 enthalten. Bereits diese geringen Zusatzmengen von Polymer P1 als Verarbeitsungshilfsmittel für POM bewirken eine deutliche Modifizierung der POM-Schmelze und verbessern den ansonsten schwer zu beherrschenden übergang (Kristallitschmelzpunkt des POM bei ca. 184 Grad C, Verarbeitung der sehr dünnflüssigen Schmelze bei 190 Grad C).
So kann POM durch Zusatz von Polymer P1 besser verarbeitet werden in der Extrusion, in Blasenformen, Thermoformen. Auch die Herstellung von hochtemperaturbeständigen Schäumen aus POM sollte bei Zusatz von Polymer P1 möglich sein. Hier empfiehlt sich der Einsatz von sehr hochmolekularem Polymer P1.
Weiterhin soll die Anfärbbarkeit und Verklebbarkeit des Materials durch Polymer P1 verbessert werden. Ferner kann die Verarbeitungstemperatur des POM durch den Zusatz von Polymer P1 gesenkt werden, wodurch eine zusätzliche Verarbeitungssicherheit erreicht wird. Darüber hinaus zeichnen sich die Polymerblends VPM durch einen verbesserten Oberflächenglanz aus.

Die folgenden Beispiele dienen zur Erläuterung der Erfindung. Die Bestimmung der Viskosität J geschieht nach IZOD 1628-6 bzw. nach DIN 7745-II, Abschn. 3.

### BEISPIELE

### Beispiele 1 - 6

Herstellung der verträglichen Polymermischungen VPM. Polyoxymethylen (DELRIN 500 F®; Produkt der DuPont) wird in den folgenden Gewichtsverhältnissen mit Polymethylacrylat (J = 60 ml/g) im Brabender ®-Meßkneter gemischt.

| | POM | Polymethacrylat |
|---|---|---|
| 1. | 98 | 2 |
| 2. | 80 | 20 |
| 3. | 67 | 33 |
| 4. | 50 | 50 |
| 5. | 33 | 67 |
| 6. | 20 | 80 |

In sämtlichen Fällen erhält man eine glasklare Schmelze, die gut verarbeitbar ist und die beim Abkühlen zu einem kristallinen Material mit gutem Oberflächenglanz erstarrt.

### Beispiel 7

40 g POM (DELRIN 500 F ®) werden mit 10 g eines Copolymerisats aus 90 Gew.-Teilen Ethylacrylat und 10 Gew.-Teilen Decylmethacrylat in einem Brabender ®-Meßkneter gemischt.

Man erhält bei 185 Grad C eine glasklare Schmelze, die zu einem Produkt mit gutem Glanz erstarrt.

### Beispiele 8 - 10

Je 40 g POM (DELRIN 500 F ®) werden mit folgenden Gewichtsteilen eines Copolymerisats aus 90 Gew.-% Ethylacrylat und 10 Gew.-% 2-Ethylhexylmethacrylat

| | POM | Copolymerisat |
|---|---|---|
| 8. | 40 g | 2 g |
| 9. | 40 g | 6 g |
| 10. | 40 g | 20 g |

im Meßkneter gemischt. Man erhält bei 185 Grad C eine glasklare Schmelze, die zu einem glänzenden Produkt erstarrt.

### Synthese der Polymeren P1 für die Abmischungen in den Beispielen 7 - 10:

### Polymer P1 für Beispiel 7:

In einem Reaktionskolben werden bei 50 - 60 Grad C 350 g Toluol, 135 g Ethylacrylat, 15 g n-Decylmethacrylat unter Argon als Schutzgas mit 0,3 g Dodecylmercaptan als Regler und 2 g t-Butylperneodecanoat als Initiator unter Rühren polymerisiert. Nach ca. 30 Minuten Reaktionszeit wird in Methanol ausgefällt und das Polymere im Vakuum getrocknet.

### Polymere P1 für die Beispiele 8 - 10:

Man verfährt wie für Beispiel 7 beschrieben, wählt jedoch eine andere Monomerenzusammensetzung: 135 g Ethylacrylat, 15 g 2-Ethylhexylmethacrylat.

### Beispiel 11

40 g POM (DELRIN 500 F ®), werden mit 10 g eines Copolymerisats aus 93 Gew.-% Methacrylat und 7 Gew.-% Styrol zu einer glasklaren Schmelze gemischt.

### Beispiel 12 (Vergleichsversuch)

40 g POM (DELRIN 500 F ®) werden mit 6 g eines Polymethylmethacrylat (PLEXIGLAS Y8N ^{R} der Röhm GmbH; J = 50 ml/g) gemischt. Man erhält eine trübe, unverträgliche Schmelze.

### Beispiel 13

90 Gew.-% Polyoxymethylen (DELRIN 900 F ®) werden mit 10 % Polymethylacrylat (J = 143 ml/g) abgemischt. Die daraus hergestellte Polymermischung läßt sich deutlich besser verarbeiten als Polyoxymethylen selbst.
So zeigt Polyoxymethylen allein bei 178 Grad C eine Schmelzviskosität von 1 940 Pa·s (1N/cm²), bei 180 Grad C dagegen eine Schmelzviskosität von nur 535 Pa·s (1N/cm²).

Dagegen ist die Schmelzviskosität der verträglichen Polymermischung in diesem Temperaturbereich deutlich weniger temperaturabhängig. So zeigt die Mischung bei
178 Grad C eine Schmelzviskosität von 530 Pa·s, bei
180 Grad C eine Schmelzviskosität von 505 Pa·s.

## Patentansprüche

1. Verträgliche Polymermischungen, ausgehend von Polyoxymethylen in Form seiner Homo- und Copolymerisate,
dadurch gekennzeichnet,
daß die Polymermischungen bestehen aus
a) 0,5 - 99,9 Gew.-% Polyoxymethylen-Komponente und
b) 99,5 - 0,5 Gew.-% eines Polymeren P1, das zu 40 - 100 Gew.-% aus mindestens einem Monomeren der Formel I 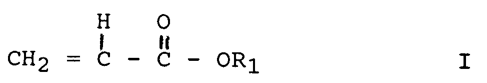 worin R₁ für Methyl oder Ethyl steht,
und zu 0 bis 60 Gew.-% aus mindestens einem Monomeren der Formel II 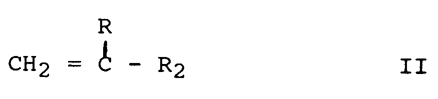 worin R für Wasserstoff oder Methyl und
R₂ für Phenyl oder für einen 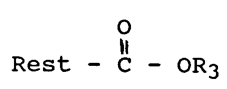 steht, worin R₃ einen Alkylrest mit 1 - 14 Kohlenstoffatomen bedeutet, mit der Maßgabe, daß nicht gleichzeitig R gleich Wasserstoff und R₁ in Formel I gleich R₃ gleich Methyl sein sollen, aufgebaut ist.

2. Verträgliche Polymermischungen gemäß Anspruch 1, dadurch gekennzeichnet, daß der Anteil der Monomeren der Formel I am Polymeren P1 mehr als 60 Gew.-% beträgt.

3. Verträgliche Polymermischungen gemäß den Ansprüchen 1 und 2, dadurch gekennzeichnet, daß der Anteil der Monomeren der Formel I am Polymeren P1 mehr als 80 Gew.-% beträgt.

4. Formkörper, hergestellt aus den Polymermischungen gemäß den Ansprüchen 1 - 3.

5. Thermisch umformbare Platten aus der Polymermischung gemäß den Ansprüchen 1 - 3.

6. Hochtemperaturbeständige Schaumstoffe, hergestellt unter Verwendung der Polymermischungen gemäß den Ansprüchen 1 - 3.

## Claims

1. Compatible polymer mixtures based on polyoxymethylene in the form of its homo- and copolymers, characterised in that the polymer mixtures consist of
a) 0.5 - 99.9 wt.% of the polyoxymethylene component and
b) 99.5 - 0.5 wt.% of a polymer P1, which is synthesised from 40 to 100 wt.% of at least one monomer of Formula I 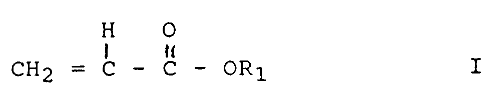 wherein R₁ is methyl or ethyl,
and, from 0 to 60 wt.% of at least one monomer of Formula II 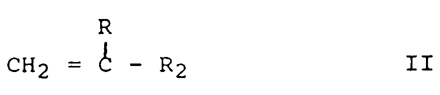 wherein R is hydrogen or methyl and
R₂ is phenyl or a group 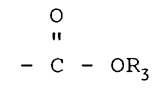 wherein R₃ represents an alkyl group having 1 to 14 carbon atoms, with the proviso that R cannot represent hydrogen when R₁ in Formula I = R₃ = methyl.

2. Compatible polymer mixtures according to claim 1, characterised in that the amount of the monomers of Formula I in polymer P1 is more than 60 wt.%.

3. Compatible polymer mixtures according to claims 1 and 2, characterised in that the amount of the monomers of Formula I in polymer P1 is more than 80 wt.%.

4. A moulded body made of the polymer mixtures according to claims 1 to 3.

5. Thermally deformable plates made of the polymer mixtures according to claims 1 to 3.

6. High-temperature resistant foam materials made by using the polymer mixtures according to the claims 1 to 3.

## Revendications

1. Mélanges de polymères compatibles, à base de polyoxyméthylène sous forme de ses homo- et copolymères, caractérisés en ce que les mélanges de polymères se composent de
a) 0,5 a 99,9% en poids de composant polyoxyméthylène et
b) 99,5 à 0,5% en poids d'un polymère P1 qui est constitué, pour 40 à 100% en poids, par au moins un monomère de formule I 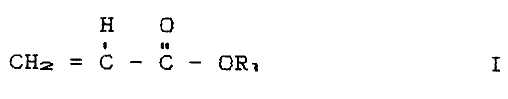 dans laquelle R₁ est mis pour un reste méthyle ou éthyle, et, pour 0 à 60% en poids, d'au moins un monomère de formule II 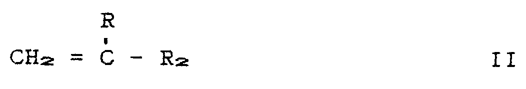 dans laquelle
R est mis pour un atome d'hydrogène ou un reste méthyle et
R₂ est mis pour un reste phényle ou pour un reste 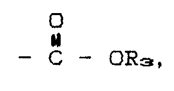 où R₃ représente un reste alkyle à 1-14 atomes de carbone, étant spécifié que quand R est un atome d'hydrogène, R₁ dans la formule I ne doit pas en même temps être identique à R₃ et représenter un reste méthyle.

2. Mélanges de polymères compatibles selon la revendication 1, caractérisés en ce que la part des monomères de formule I dans le polymère P1 s'élève à plus de 60% en poids.

3. Mélanges de polymères compatibles selon la revendication 1 ou 2, caractérisés en ce que la part des monomères de formule I dans le polymère P1 s'élève à plus de 80% en poids.

4. Corps moulés, fabriqués à partir des mélanges de polymères selon l'une quelconque des revendications 1 à 3.

5. Plaques transformables thermiquement, faites du mélange de polymères selon l'une quelconque des revendications 1 à 3.

6. Mousses résistantes aux hautes températures, fabriquées avec utilisation des mélanges de polymères selon l'une quelconque des revendications 1 à 3.
